# EUROPÄISCHE PATENTSCHRIFT

(11) **EP 1 250 619 B1**
(45) Veröffentlichungstag und Bekanntmachung des Hinweises auf die Patenterteilung: **06.08.2003**
(21) Anmeldenummer: 01909532.2
(22) Anmeldetag: 26.01.2001
(51) Int. Cl.: G02B 6/44

(54) **MUFFENEINSATZ UND MUFFE ZUR FÜHRUNG VON LWL-ELEMENTEN UND ZUR AUFNAHME EINER SPLEISSEINRICHTUNG**
SLEEVE INSERT AND SLEEVE FOR GUIDING OPTICAL WAVEGUIDE ELEMENTS AND FOR ACCOMMODATING A SPLICING DEVICE
PIECE RAPPORTEE A EMBOITEMENT ET MANCHON POUR GUIDER DES ELEMENTS A FIBRES OPTIQUES ET POUR LOGER UN DISPOSITIF D'EPISSURAGE

(30) Priorität: 28.01.2000 DE 10003636
(43) Veröffentlichungstag der Anmeldung: 23.10.2002
(73) Patentinhaber: CCS Technology, Inc., Wilmington, DE 19803 (US)
(72) Erfinder: MÜLLER, Thorsten, 58708 Menden (DE); ZIMMER, Rainer, 85579 Schalksmühle (DE)
(74) Vertreter: Sturm, Christoph, Dipl.-Ing.
(86) Internationale Anmeldenummer: DE0100326
(87) Internationale Veröffentlichungsnummer: WO01055754

(56) Entgegenhaltungen:
- EP-A- 0 532 980
- DE-U- 29 721 956
- DE-U- 29 908 917

## Beschreibung

Die Erfindung betrifft einen Muffeneinsatz beziehungsweise eine Muffe zur Führung von LWL-Elementen und zur Aufnahme einer Spleißeinrichtung.

Ein in der Technik häufig auftretendes Problem ist das übersichtliche und sichere Organisieren und Ablegen von LWL-Elemeten, beispielsweise Bündeladern und Bändchenfasern, einschließlich deren Überlängen. Insbesondere in der modernen Telekommunikation, etwa beim Einsatz von großen Glasfasernetzwerken oder konventionellen Kabelnetzwerken, stellt sich immer wieder das Problem, nach dem Spleißen eines Aderbündels die einzelnen Adern übersichtlich und sicher abzulegen. Vorzugsweise sollte dies natürlich in unmittelbarer Nähe der üblichen Spleißeinrichtungen, beispielsweise Spleißkassetten oder Spleißablageeinrichtungen, in denen die eigentliche Spleißung des Aderbündels erfolgt, geschehen.

Üblich war es daher, die Spleißeinrichtungen in einer Muffe anzuordnen und in dieser zu fixieren. Die Muffe kann eine sogenannte Haubenmuffe oder eine Durchgangsmuffe sein. Eine Haubenmuffe besteht aus einem etwa tellerförmigen Abschlusselement und einem haubenförmigen Hauptteil, in dem die Spleißeinrichtung und die LWL-Elemente einschließlich der Überlängen angeordnet sind und der mit dem Abschlusselement verbunden ist, um eine geschlossene Muffe zu bilden. Bei einer Durchgangsmuffe sind an den beiden Enden tellerförmige Abschlusselemente vorgesehen, die mit dem Hauptteil eine geschlossene Muffe bilden. Der Nachteil der bekannten Muffen besteht allerdings darin, dass die LWL-Elemente ohne jegliche Organisation in diesem Kassettenpaket verlegt sind. Im Fall einer Wartung ist es daher sehr schwierig, die jeweils richtigen Bündeladern oder Adern zu finden.

Aus der DE 402 98 57 ist ein Muffeneinsatz bekannt, der aus einem in seiner Länge an die Abmessung der jeweiligenMuffe anzupassenden Profilkörper besteht.
Der Profilkörper weist eine Bodenplatte und mehrere, einander gegenüberliegende parallele Seitenwände auf, so dass jeweils zwei einander gegenüberliegende Seitenwände und ein Teil der Bodenplatte eine nach oben offene Kammer zur Aufnahme und Führung von Lichtwellenleitern und anderen Elementen bilden. Die Seitenwände tragen zusätzlich Führungsverstrebungen, so dass die einzelnen Kammern durch Einsätze, wie beispielsweise Spleißhalter noch einmal unterteilt werden können.

Es ist daher eine Aufgabe der Erfindung, einen neuen Muffeneinsatz beziehungsweise eine Muffe bereitzustellen, der beziehungsweise die eine übersichtliche und sichere Organisation der LWL-Elemente, das heißt der Bündeladern und Bändchenfasern, sowie die Aufnahme von Spleißeinrichtungen in einer Muffe ermöglicht.

Erfindungsgemäß wird die Aufgabe durch einen Muffeneinsatz zur Führung von LWL-Elementen und zur Aufnahme einer Spleißeinrichtung gelöst, die dadurch gekennzeichnet ist, dass er einen Profilkörper aufweist, dessen Länge an die Abmessung der jeweiligen Muffe anzupassen ist, dass der Profilkörper zwei einander gegenüberliegende Seitenwände hat, die beabstandet voneinander auf einer Bodenwand ausgebildet sind, so dass die Seitenwände und die Bodenwand eine Kammer bilden, dass die Seitenwände an ihrem der Bodenwand abgewandten Ende jeweils eine Führungswand aufweisen, die sich zu der der Kammer abgewandten Seite erstrecken, und dass die Bodenwand an jedem ihrer Enden eine beidseitige Führungswand aufweist, wobei zusätzlich zu der Kammer drei um diese herum angeordnete Führungskammern für die Aufnahme und die Führung von LWL-Elementen jeweils durch zwei Führungswände und die Seitenwände beziehungsweise die Bodenwand gebildet sind. Mit Hilfe dieses Profilkörpers beziehungsweise der darin gebildeten Kammern und Führungskammern ist eine ordnungsgemäße Organisation oder ein Management der LWL-Elemente einschließlich der Überlängen und der Spleißeinrichtungen möglich. Die LWL-Elemente werden durch das Abschlusselement in das Innere der Muffe beziehungsweise in den Profilkörper geführt, dort in einer Spleißkassette oder in einer Spleißablageeinrichtung gespleißt, die jeweils in einer der Kammern angeordnet sind, und die Überlängen der LWL-Elemente beziehungsweise der Bündeladern und Bändchenfasern werden dann von der Spleißeinrichtung in die angrenzenden Kammern geführt und dort ordnungsgemäß abgelegt. Dadurch ergibt sich ein übersichtliches und einfaches Überlängenmanagement.

Eine vorteilhafte Ausgestaltung des erfindungsgemäßen Muffeneinsatzes ist dadurch gekennzeichnet, dass die Kammer zur Aufnahme einer Spleißkassette ausgebildet ist. Die etwas größer gehaltene Kammer eignet sich für die Aufnahme der Spleißkassette, wobei die zu der Spleißkassette führenden LWL-Elemente und die von der Spleißkassette abgehenden LWL-Elemente in einfacher Weise über die Endkanten des Profilkörpers und dann in die angrenzenden Führungskammern geführt werden können.

Eine weitere vorteilhafte Ausgestaltung des erfindungsgemäßen Muffeneinsatzes ist dadurch gekennzeichnet, dass eine der Führungskammern zur Aufnahme einer Spleißablageeinrichtung ausgebildet ist. Dies ermöglicht es, eine Spleißung des LWL-Elements übersichtlich in einer der Führungskammern anzuordnen.

Eine weitere vorteilhafte Ausgestaltung des erfindungsgemäßen Muffeneinsatzes ist dadurch gekennzeichnet, dass die Seitenwände doppelwandig ausgebildet sind. Dies erhöht die Stabilität des Muffeneinsatzes.

Eine weitere vorteilhafte Ausgestaltung des erfindungsgemäßen Muffeneinsatzes ist dadurch gekennzeichnet, dass die doppelwandigen Seitenwände als Einrastmittel für die Befestigung eines Deckels und/oder von Befestigungselementes ausgebildet sind. Befestigungselemente können etwa Federbeine sein, die an der Innenwand der Muffe anliegen und so den Einsatz in der Muffe festhalten. Der Deckel kann in vorteilhafter Weise zum weiteren Schutz und zur zusätzlichen Führung der aufgenommenen Bündeladern dienen.

Eine erfindungsgemäße Muffe mit einem Hauptteil und einem Abschlusselement an einem Ende des Hautteils oder zwei Abschlusselementen an den beiden Enden des Hauptteils weist einen Muffeneinsatz der vorstehend beschriebenen Art auf. Dadurch ergibt sich in vorteilhafter Weise eine Muffe, deren Innenausstattung so getroffen ist, dass ein ordnungsgemäßes Überlängenmanagement in dem Inneren der Muffe aufgrund der Ausbildung des Profilkörpers möglich ist.

Eine vorteilhafte Ausgestaltung des erfindungsgemäßen Muffeneinsatzes ist dadurch gekennzeichnet, dass die Muffe eine Durchgangsmuffe ist, wobei die ankommenden LWL-Elemente durch das eine Anschlusselement in das Innere der Durchgangsmuffe eingeführt und durch das Abschlusselement am gegenüberliegenden Ende der Haube der Durchgangsmuffe wieder herausgeführt werden. Auch hier werden die Überlängen der LWL-Elemente in den betreffenden Führungskammern beziehungsweise der Hauptkammer ordnungsgemäß untergebracht.

Eine vorteilhafte Ausgestaltung des erfindungsgemäßen Muffeneinsatzes ist dadurch gekennzeichnet, dass die Muffe eine Haubenmuffe ist, wobei die LWL-Elemente durch ein und dasselbe Abschlusselemente eingeführt und aus der Muffe wieder herausgeführt werden. Auch bei diesem Muffentyp sorgt der Profilkörper für ein ordnungsgemäßes Überlängenmanagement.

Ein großer Vorteil der Erfindung besteht darin, dass für alle Muffenlängen derselbe Profilkörper verwendet werden kann. Beim Einsatz ist es beispielsweise möglich, den Profilkörper erst vor Ort auf die für die Muffe mögliche Länge zu kürzen.

Ausführungsbeispiele der Erfindung ergeben sich aus der folgenden detaillierten Beschreibung im Zusammenhang mit den beiliegenden Zeichnungen. In den Figuren zeigt:
- Figur 1: eine perspektivische Ansicht eines erfindungsgemäßen Muffeneinsatzes;
- Figur 2: eine perspektivische Ansicht zweier Befestigungselemente;
- Figur 3: eine perspektivische Ansicht eines Deckels;
- Figur 4: eine perspektivische Ansicht eines Muffeneinsatzes mit daran eingerasteten Befestigungselementen;
- Figur 5: die Rückansicht des in Fig. 4 gezeigten Muffeneinsatzes;
- Figur 6: eine perspektivische Ansicht eines erfindungsgemäßen Muffeneinsatzes mit Deckel und Befestigungselementen;
- Figur 7: die Rückansicht der in Fig. 6 gezeigten Anordnung;
- Figur 8: zwei erfindungsgemäße Muffeneinsätze mit unterschiedlicher Länge;
- Figur 9: eine weitere Ausführungsform des erfindungsgemäßen Muffeneinsatzes mit darauf montierter Spleißablageeinrichtung.

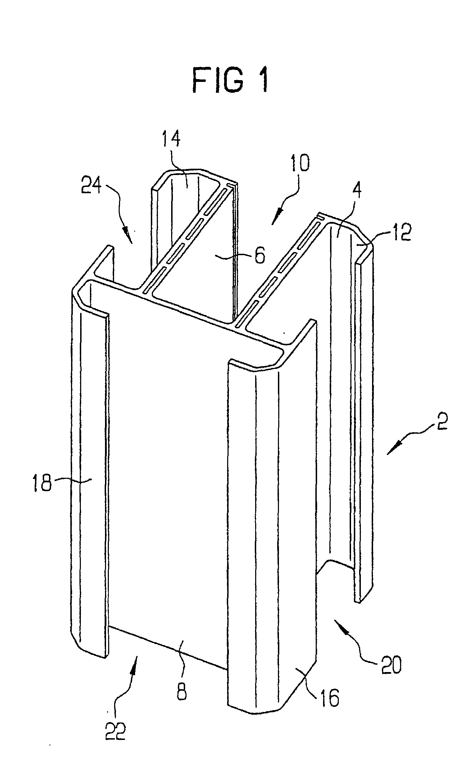

In Fig. 1 ist eine perspektivische Ansicht eines Muffeneinsatzes dargestellt, der aus einem Profilkörper 2 besteht, der in seinen Abmessungen, insbesondere in der Länge an die Abmessung der jeweiligen Muffe angepasst werden kann.

Der Profilkörper 2 besteht aus zwei parallel unter Abstand zueinander angeordneten Seitenwänden 4,6, die bei der bevorzugten Ausführungsform als doppelwandige flächige Elemente ausgestaltet sind. Die beiden Seitenwände 4,6 sind voneinander beabstandet auf einer Bodenwand 8 ausgebildet, die ebenfalls ein ebenes flächiges Element ist. Bei der bevorzugten Ausführungsform stehen die beiden Seitenwände 4,6 senkrecht auf der Bodenwand 8. Jedoch ist der rechte Winkel zwischen den Seitenwänden und der Bodenwand nicht zwingend.

Durch die Seitenwände 4,6 und die Bodenwand 8 wird eine Kammer 10 von drei Seiten begrenzt, die zur Aufnahme einer Spleißkassette ausgebildet beziehungsweise dimensioniert ist. In diesem Zusammenhang kann es vorteilhaft sein, dass die beiden Seitenwände 4,6 auf der Bodenwand 8 leicht aufeinander zu verlaufend ausgebildet sind, so dass sie bei Einführung der Spleißkassette in die Kammer 10 federnd an die Spleißkassette angedrückt werden.

Die beiden Seitenwände weisen darüber hinaus an ihrem der Bodenwand abgewandten Ende jeweils eine Führungswand 12,14 auf, die sich von der Kammer 10 weg erstrecken. Bei der bevorzugten Ausführungsform sind die Führungswände 12,14 jeweils bogenförmig ausgestaltet. Auch die Bodenwand 8 hat an ihren Enden jeweils doppelseitige Führungswände 16,18. Diese Führungswände 16,18 erstrecken sich zu beiden Seiten der Bodenwand 8. Auf diese Art entstehen rund um die Kammer 10 drei weitere Führungskammern 20, 22, 24, die jeweils zum Organisieren und Ablegen von Bündeladern und Bändchenfasern, einschließlich deren Überlangen, oder zum Unterbringen von Spleißablageeinrichtungen ausgebildet sind.

Der gezeigte Muffeneinsatz kann als extrudierter Kunststoffkörper oder auch als Metallgusskörper ausgebildet sein.

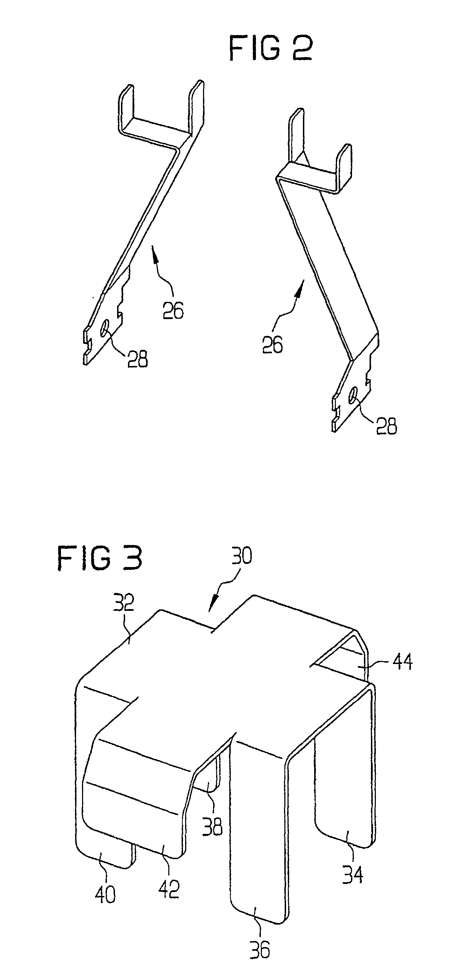

In Fig. 2 sind Befestigungselemente 26 gezeigt, die dazu dienen, den erfindungsgemäßen Muffeneinsatz in einer Muffe zu fixieren. Die Befestigungselemente 26 können ebenfalls aus Kunststoff oder Metall gebildet sein und eine gewisse Elastizität aufweisen. An der Muffe können die Befestigungselemente 26 durch Klemm- oder Schraubeingriff festgelegt werden. Hierfür sind Gewindelöcher 28 an einem Ende der Befestigungselemente ausgebildet.

In Fig. 3 ist ein Deckel 30 für einen erfindungsgemäßen Muffeneinsatz gezeigt. Der Deckel 30, der ebenfalls als Kunststoffkörper oder Metallkörper ausgebildet sein kann, weist eine Grundplatte 32 auf, von deren Ecken sich vier Eingriffelemente 34,36,38,40 weg erstrecken. Zusätzlich sind an den Längsseiten der Grundplatte 32 zwischen zwei Eingriffelementen bogenförmige Abdeckkappen 42, 44 ausgebildet.

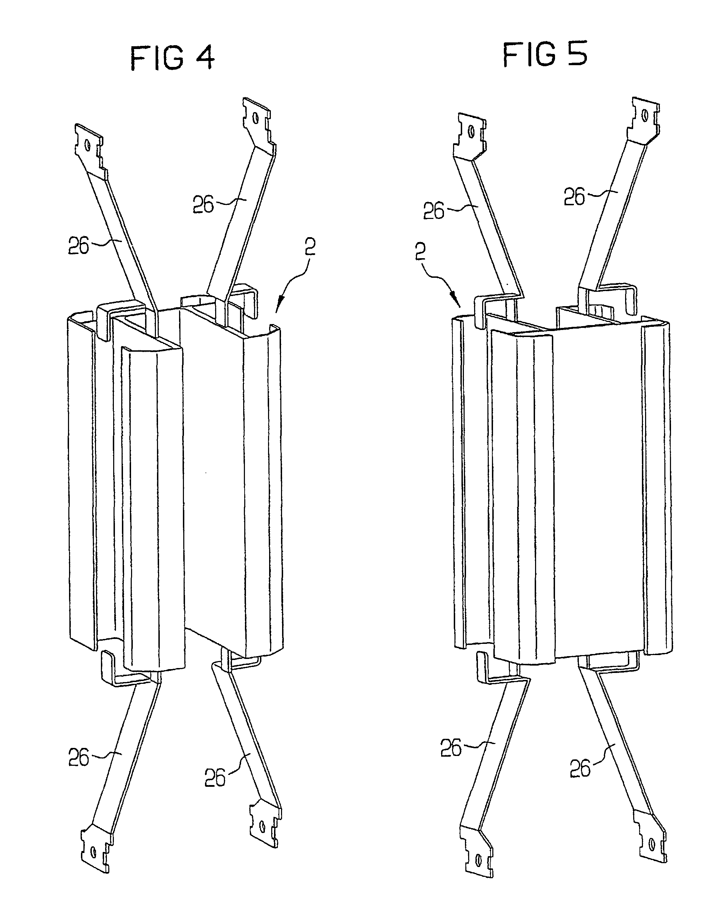

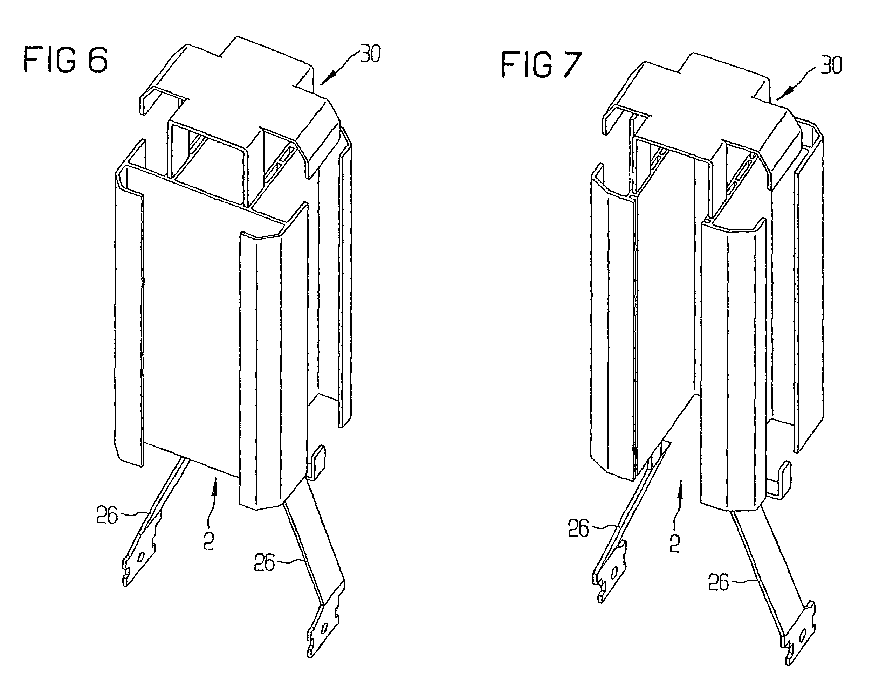

Fig. 4 zeigt einen erfindungsgemäßen Muffeneinsatz, wie er beim Einsatz in einer Durchgangsmuffe verwendet wird. Der Muffeneinsatz ist mit vier Befestigungselementen 26 ausgestattet. Die Befestigungselemente 26 greifen mit einem ihrer Enden in den Zwischenraum der doppelwandigen Seitenwände 4,6 ein und rasten dort fest. Auf diese Art werden an dem Muffeneinsatz Befestigungselemente 26 angebracht, die mit ihren abgewandten Enden derart ausgestaltet sind, dass sie federnd an der Außenwand einer Durchgangsmuffe anliegen. So wird sichergestellt, dass der Muffeneinsatz sicher in der Muffe gehalten werden kann. Fig.5 zeigt die Rückansicht dieser Anordnung.

Die Anwendung des erfindungsgemäßen Muffeneinsatzes im Zusammenhang mit einer Haubenmuffe ist in den Figuren 6 und 7 gezeigt. Der Profilkörper 2 des Muffeneinsatzes ist an einem seiner Enden mit zwei Befestigungselementen 26 versehen. Dieses Ende wird dem offenen Ende der Muffenhaube zugewandt, so dass die Befestigungselemente 26 mit dem tellerförmigen Abschlusselement verbunden werden können.

Auf der gegenüberliegenden Seite, also der dem geschlossenen Ende der Muffe zugewandten Seite, ist ein Deckel 30 vorgesehen. Der Deckel 30 wird ebenfalls in Hohlräume der doppelwandigen Seitenwände 4,6 eingeführt und rastet dort ein. Die bogenförmigen Wandabschnitte 42, 44 des Deckels schließen zwei der Führungskammern zum Ende der Muffe hin ab. Fig. 7 zeigt eine Rückansicht zu der Anordnung aus Fig. 6.

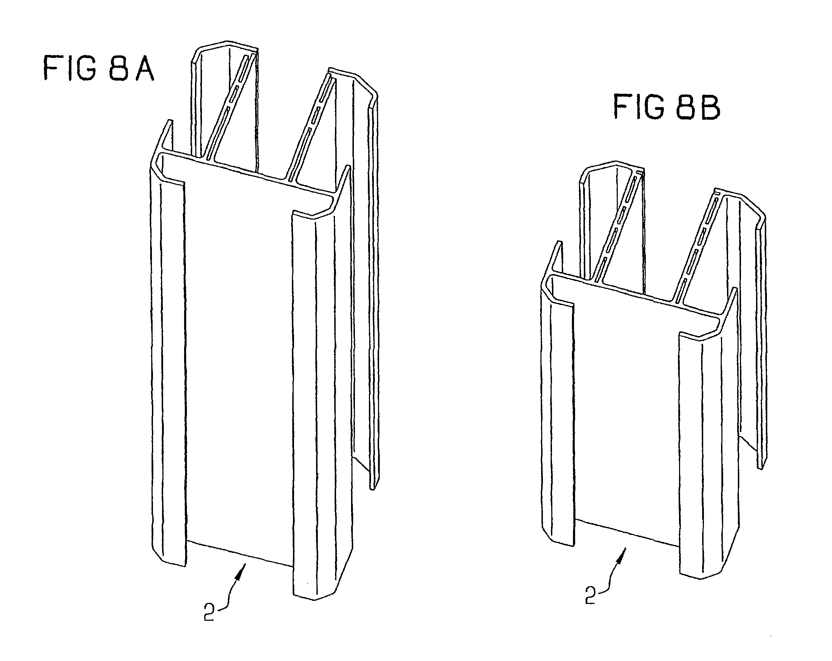

In Fig. 8 sind zwei verschiedene Längen des Profilkörpers 2 für den Muffeneinsatz dargestellt. In vorteilhafter Weise kann der Profilkörper als ein langes durchgehendes Profil extrudiert werden und in die jeweils geforderten Längen geschnitten werden. Fig. 8 zeigt zwei mögliche Längen für unterschiedliche Muffen.

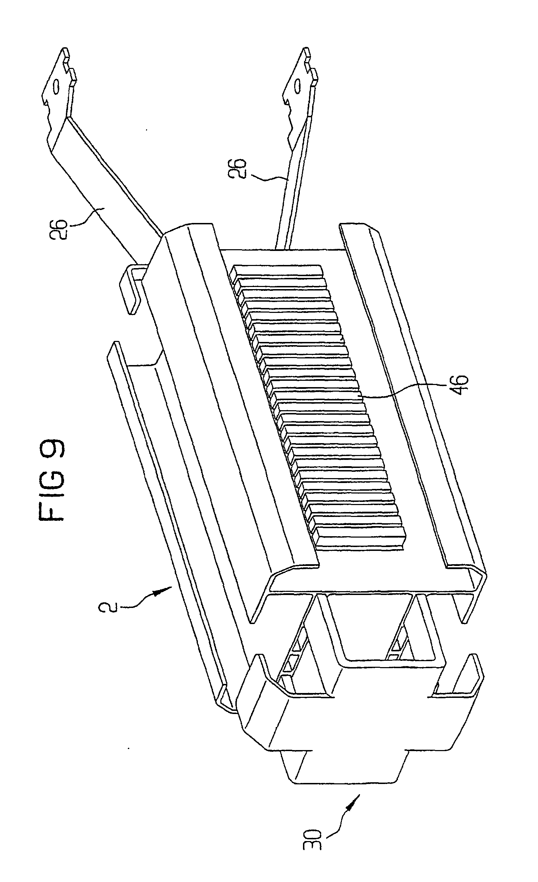

Eine zweite erfindungsgemäße Ausführungsform ist in Fig. 9 gezeigt. Die Ausführungsform von Fig. 9 unterscheidet sich von der derjenigen aus den Figuren 6 und 7 dahingehend, dass der Profilkörper 2 mit einer Spleißablageeinrichtung in einer der Führungskammern ausgebildet ist. Eine derartige rasterartige Spleißablageeinrichtung 46 dient zur Spleißablage in übersichtlicher Art.

Der Profilkörper 2, die Befestigungselemente 26 und der Deckel 30 bilden zusammen ein multifunktionales Faser-Managementsystem. In dem Profilkörper 2 können Bündeladern oder Faserbändchen organisiert werden und es kann eine Spleißkassette oder eine Spleißablageeinrichtung aufgenommen werden. Die Befestigungselemente 26 sorgen für einen sicheren Halt des Profilkörpers 2 in einer Muffe. Der Deckel 30 ist zum Schutz der Bündeladern oder Faserbändchen vorgesehen.

Bei der Verwendung in Durchgangsmuffen werden dementsprechend an beiden Enden des Profilkörpers 2 Befestigungselemente 32 vorgesehen. Diese können entweder mit entsprechenden Eingriffsmitteln einrastend am Profilkörper 2 befestigt sein, oder mit diesem durch Schraubverbindung zusammenwirken.

Der Profilkörper 2 wird vorzugsweise als extrudiertes Kunststoffprofil gebildet, so dass die Anpassung an verschiedene Muffenlängen problemlos möglich ist. Die doppelwandige Ausbildung der Seitenwände 4, 6, wodurch Taschen beziehungsweise Nuten entstehen, ermöglicht das Einrasten der Befestigungselemente 26 oder des Deckels 30.

Der Profilkörper 2 bildet somit, wie bereits ausgeführt, drei Führungskammern 20, 22, 24 zur Überlängenaufnahme und Führung von Bündeladern, sowie Bereiche zur Ablage der Spleißkassette oder der Spleißablageeinrichtung. Wenn anstatt der Bündeladern beispielsweise Faserbändchen zu organisieren sind, kann eine der Führungskammern 20, 22, 24 direkt zur Spleißaufnahme genutzt werden. Hierfür wird dann vorzugsweise eine Spleißablageeinrichtung 46 in dieser Kammer montiert.

Durch dieses System mit drei Führungskammern 20, 22, 24 ist eine optimale Trennung der einzelnen Bündeladern-Faser-bändchen möglich, so dass zum Beispiel ankommende und abgehende oder geschnittene und ungeschnittene Kabel bestmöglich organisiert und geführt werden können.

Die Befestigungselemente 26 bilden wiederum die Verbindung zur Muffe beziehungsweise zum Dichtkörper und werden dort zum Beispiel mittels Schrauben befestigt. Hierfür können Gewindelöcher 28 an den jeweiligen an der Oberfläche der Muffe anliegenden Enden der Befestigungselemente 26 vorgesehen sein.

Obwohl die Erfindung im Zusammenhang mit einer bevorzugten Ausführungsform beschrieben ist, ist sie hierauf nicht beschränkt. So sind beispielsweise in den Figuren die Führungswände 12,14 an den Seitenwänden 4,6 jeweils bogenförmig dargestellt. Die Führungswände 12,14 können aber auch rechtwinklig sein. Ebenso sind die Führungswände 16,18 an der Bodenwand 8 bogenförmig dargestellt. Auch dies ist nicht zwingend notwendig. Die bogenförmige Ausgestaltung der Führungswände 12,14 ist allerdings im Zusammenhang mit Untenmuffen vorteilhaft, da auf diese Art eine zusätzliche Führung des Profilkörpers 2 in der Muffe ermöglicht wird.

In der gezeigten Ausführungsform sind die ersten Seitenwände rechtwinklig auf dem zweiten Seitenstück angebracht. Auch dies ist nicht zwingend erforderlich. Insbesondere kann es vorteilhaft sein, die beiden Seitenwände 4,6 aufeinander zu geneigt auszubilden. Auf diese Art wird die Spleißkassette in der Kammer 10 federnd gehalten.

## Patentansprüche

1. Muffeneinsatz zur Führung von LWL-Elementen und zur Aufnahme einer Spleißeinrichtung, mit einem Profilkörper (2), dessen Länge an die Abmessung der jeweiligen Muffe anzupassen ist, wobei der Profilkörper (2) aufweist: eine Bodenwand (8), zwei in einem Abstand voneinander einander gegenüberliegende Seitenwände (4, 6), die jeweils in einem Abstand vom Längsseitenrand der Bodenwand (8) auf dieser ausgebildet sind, wobei die Seitenwände und die Bodenwand eine nach oben offene Kammer (10) bilden, und wobei die Seitenwände (4, 6) an ihrem von der Bodenwand (8) abgewandten Ende jeweils eine obere L-förmige Führungswand (12, 14) aufweisen, **dadurch gekennzeichnet, dass** sich die obere Führungswand die sich im Querschnitt ausgehend von der Bodenwand (8) zunächst ein Stück in Richtung zu der der Kammer (10) abgewandten Seite und dann ein Stück in Richtung zur Bodenwand (8) hin erstreckt, und wobei die Bodenwand (8) an jedem ihrer Längsseitenränder eine untere L-förmige Führungswand (16, 18) aufweist, die sich im Querschnitt in Richtung zu dem von der Bodenwand (8) abgewandten Ende der zugehörigen Seitenwand erstreckt, so dass von ihr zusammen mit der jeweils zugehörigen oberen Führungswand der Seitenwände jeweils eine laterale seitlich offene Führungskammer (20, 24) ausgebildet wird, und die sich ferner im Querschnitt zunächst ein Stück von dem von der Bodenwand (8)abgewandten Ende weg und dann in Stück nach innen erstreckt, so dass von den beiden unteren Führungswänden der Bodenwand (16, 18) ferner eine untere nach unten offene Führungskammer ausgebildet wird.

2. Muffeneinsatz nach Anspruch 1, **dadurch gekennzeichnet, dass** die nach oben offene Kammer (10) zur Aufnahme einer Spleißkassette ausgebildet ist.

3. Muffeneinsatz nach Anspruch 1 oder 2, **dadurch gekennzeichnet, dass** eine der Führungskammern (20, 22, 24) zur Aufnahme einer Spleißablageeinrichtung (46) ausgebildet ist.

4. Muffeneinsatz nach einem der Ansprüche 1 bis 3, **dadurch gekennzeichnet, dass** die Seitenwände (4, 6) doppelwandig ausgebildet sind.

5. Muffeneinsatz nach Anspruch 4, **dadurch gekennzeichnet, dass** die doppelwandigen Seitenwände (4, 6) als Einrastmittel für die Befestigung eines Deckels (30) und/oder von Befestigungselementen (26) ausgebildet sind.

6. Muffe mit einem Grundkörper und einem Abschlusselement an einem Ende des Grundkörpers oder zwei Abschlusselementen an den beiden Enden des Grundkörpers sowie einem Muffeneinsatz nach einem der vorhergehenden Ansprüche.

7. Muffe nach Anspruch 6, **dadurch gekennzeichnet, dass** die Muffe eine Durchgangsmuffe ist.

8. Muffe nach Anspruch 6, **dadurch gekennzeichnet, dass** die Muffe eine Haubenmuffe ist.

## Claims

1. Sleeve insert for guiding optical waveguide elements and for accommodating a splicing device, comprising a profiled body (2), the length of which must be adapted to the dimension of the respective sleeve, the profiled body (2) exhibiting the following: a bottom wall (8), two side walls (4, 6) which are opposite one another at a distance from one another and which are in each case constructed on the bottom wall (8) at a distance from the longitudinal side edge of the bottom wall, the side walls and the bottom wall forming a chamber (10) open at the top, and the side walls (4, 6) having at their end facing away from the bottom wall (8) in each case an upper-shaped guide wall (12, 14), **characterized in that** the upper guide wall which, in cross section, coming from the bottom wall (8), first extends a little way in the direction of the side facing away from the chamber (10) and then a little way in the direction of the bottom wall (8), and the bottom wall (8) having at each of its longitudinal side edges a lower-shaped guide wall (16, 18) which, in cross section, extends in the direction of the end, facing away from the bottom wall (8), of the associated side wall, so that it in each case forms, together with the respective associated upper guide wall of the side walls, a lateral guide chamber (20, 24) open at the side and which, in cross section, also initially extends a little way away from the end facing away from the bottom wall (8) and then a little way towards the inside, so that furthermore a lower guide chamber open at the bottom is formed by the two lower guide walls (16, 18) of the bottom wall.

2. Sleeve insert according to Claim 1, **characterized in that** the chamber (10) open at the top is constructed for accommodating a splicing cassette.

3. Sleeve insert according to Claim 1 or 2, **characterized in that** one of the guide chambers (20, 22, 24) is constructed for accommodating a splice enclosure (46).

4. Sleeve insert according to one of Claims 1 to 3, **characterized in that** the side walls (4, 6) are constructed to be double-walled.

5. Sleeve insert according to Claim 4, **characterized in that** the double-walled side walls (4, 6) are constructed as latching means for attaching a cover (30) and/or attachment elements (26).

6. Sleeve comprising a base body and a closing element at one end of the base body or two closing elements at both ends of the base body, and a sleeve insert according to one of the preceding claims.

7. Sleeve according to Claim 6, **characterized in that** the sleeve is a through sleeve.

8. Sleeve according to Claim 6, **characterized in that** the sleeve is a cap sleeve.

## Revendications

1. Insert de manchon pour guider des éléments de guides d'ondes optiques et pour recevoir un dispositif d'épissurage, comprenant un corps profilé (2), dont la longueur doit être adaptée à la dimension de chaque manchon respectif, le corps profilé (2) présentant : une paroi de fond (8), deux parois latérales (4, 6) en regard et espacées l'une de l'autre, qui sont réalisées à chaque fois à une certaine distance du bord latéral longitudinal de la paroi de fond (8) sur celle-ci, les parois latérales et la paroi de fond formant une chambre ouverte vers le haut (10), et les parois latérales (4, 6) présentant sur leur extrémité opposée à la paroi de fond (8), une paroi de guidage supérieure respective en forme de L (12, 14), **caractérisé en ce que** la paroi de guidage supérieure s'étend en section transversale, depuis la paroi de fond (8) d'abord en partie dans la direction du côté opposé à la chambre (10) puis en partie dans la direction de la paroi de fond (8), et la paroi de fond (8) présentant, sur chacun de ses bords latéraux longitudinaux une paroi de guidage inférieure en forme de L (16, 18), qui s'étend en section transversale dans la direction de l'extrémité opposée à la paroi de fond (8) de la paroi latérale associée, de sorte qu'elle forme, conjointement avec la paroi de guidage supérieure associée respective de la paroi latérale à chaque fois une chambre de guidage ouverte latéralement (20, 24), et qui s'étend en outre en section transversale d'abord en partie à l'écart de l'extrémité opposée à la paroi de fond (8) puis en partie vers l'intérieur, de sorte que les deux parois de guidage inférieures de la paroi de fond (16, 18) forment en outre une chambre de guidage inférieure ouverte vers le bas.

2. Insert de manchon selon la revendication 1, **caractérisé en ce que** la chambre (10) ouverte vers le haut est réalisée pour recevoir une cassette d'épissurage.

3. Insert de manchon selon la revendication 1 ou 2, **caractérisé en ce que** l'une des chambres de guidage (20, 22, 24) est réalisée pour recevoir un dispositif de pose d'épissure (46).

4. Insert de manchon selon l'une quelconque des revendications 1 à 3, **caractérisé en ce que** les parois latérales (4, 6) sont réalisées avec des doubles parois.

5. Insert de manchon selon la revendication 4, **caractérisé en ce que** les parois latérales à double paroi (4, 6) sont réalisées sous la forme de moyens d'encliquetage pour la fixation d'un couvercle (30) et/ou d'éléments de fixation (26).

6. Manchon comprenant un corps de base et un élément de terminaison à une extrémité du corps de base ou deux éléments de terminaison aux deux extrémités du corps de base, ainsi qu'un insert de manchon selon l'une quelconque des revendications précédentes.

7. Manchon selon la revendication 6, **caractérisé en ce que** le manchon est un manchon traversant.

8. Manchon selon la revendication 6, **caractérisé en ce que** le manchon est un manchon à capuchon.
